# EUROPÄISCHE PATENTSCHRIFT

(11) **EP 4 124 832 B1**
(45) Veröffentlichungstag und Bekanntmachung des Hinweises auf die Patenterteilung: **11.03.2026**
(21) Anmeldenummer: 22186258.4
(22) Anmeldetag: 21.07.2022
(51) Int. Cl.: G01D 3/08, E05F 15/40, G01B 7/02, E05F 15/73

(54) **ÜBERWACHUNGSEINRICHTUNG ZUR ÜBERWACHUNG DER POSITION EINES GEBÄUDEELEMENTES UND VERFAHREN ZUR ÜBERWACHUNG DER POSITION EINES GEBÄUDEELEMENTES**
MONITORING DEVICE FOR MONITORING THE POSITION OF A BUILDING ELEMENT AND METHOD FOR MONITORING THE POSITION OF A BUILDING ELEMENT
DISPOSITIF DE SURVEILLANCE POUR SURVEILLER LA POSITION D'UN ÉLÉMENT DE BÂTIMENT ET PROCÉDÉ DE SURVEILLANCE DE LA POSITION D'UN ÉLÉMENT DE BÂTIMENT

(30) Priorität: 29.07.2021 DE 102021208173
(43) Veröffentlichungstag der Anmeldung: 01.02.2023
(73) Patentinhaber: Aug. Winkhaus SE, 48291 Telgte (DE)
(72) Erfinder: Bickert, Peter, 48291 Telgte (DE); Aswegen, Helmut, 48291 Telgte (DE)

(56) Entgegenhaltungen:
- DE-A1- 102016 108 846
- DE-A1- 102018 115 530
- JP-A- 2020 080 486
- US-A1- 2007 180 890
- US-A1- 2021 080 290
- HALL: "MICRO SWITCH Sensing and Control", 1 January 2021 (2021-01-01), XP055860583, Retrieved from the Internet <URL:https://sensing.honeywell.com/hallbook.pdf> [retrieved on 20211111]

## Beschreibung

Die Erfindung betrifft eine die Position eines Gebäudeelementes eines gegen einen Rahmen schwenkbaren Flügels, einer Klappe oder dergleichen überwachende Überwachungseinrichtung mit einem ersten Sensor und mit einem zweiten Sensor, und mit einer Auswerteeinheit zur Auswertung der Signale. Weiterhin betrifft die Erfindung ein Überwachungsverfahren zur Überwachung der Position eines Gebäudeelementes eines gegen einen Rahmen schwenkbaren Flügels, einer Klappe oder dergleichen bei dem Signale eines ersten Sensors und eines zweiten Sensors erfasst werden.

Eine Statusüberwachungseinrichtung und ein Verfahren zum Detektieren einer Position einer Barriere sind beispielsweise aus der EP 3 387 201 B1 bekannt. Bei dieser Statusüberwachungseinrichtung sind zwei unterschiedliche Sensoren vorgesehen, wobei einer der Sensoren beispielsweise als Beschleunigungssensor und der andere Sensor beispielsweise als Näherungssensor ausgebildet ist. Hierdurch kann einer der Sensoren beispielsweise zur Kalibrierung des anderen Sensors verwendet werden.

Die DE 10 2016 108 846 A1 offenbart eine Winkelsensoranordnung mit zwei Sensorsubstraten, die derart angeordnet sind, dass sie unterschiedliche Winkellagen in Bezug auf eine Rotationsachse einnehmen. Diese Gestaltung ermöglicht die Schaffung einer besonders hohen Genauigkeit der Winkelsensoranordnung. Ein extern angelegtes Magnetfeld führt zu einer Veränderung des erfassten Winkels. Damit lässt sich der erfasste Winkel einfach manipulieren.

Die US 2007/0180890 A1 offenbart einen einzigen magnetischen Sensor zur Erfassung der funktionellen Position eines Gelenks. Ein Magnet und ein Sensorelement sind auf unterschiedlichen Teilen des Gelenks angeordnet. Ein extern angelegtes Magnetfeld führt zu einer möglichen Manipulation der Signale des Sensorelements.

Bei Gebäuden, deren Elemente wie Türen, Fenster, Klappen und Luken auf einen vorgesehenen geschlossenen Zustand überwacht werden sollen, ist die Zuverlässigkeit und die Manipulationssicherheit der Sensoren von großer Bedeutung.

Der Erfindung liegt das Problem zugrunde, eine Überwachungseinrichtung der eingangs genannten Art so weiter zu bilden, dass sie besonders manipulationssicher ist und eine vorgesehene Position des Gebäudeelementes zuverlässig erfasst. Weiterhin soll ein besonders zuverlässiges und manipulationssicheres Verfahren zur Überwachung der Position des Gebäudeelementes geschaffen werden.

Das erstgenannte Problem wird erfindungsgemäß dadurch gelöst, dass
die beiden Sensoren dasselbe physikalische Funktionsprinzip aufweisen, wobei die Sensoren und ein die Sensoren ansteuerndes Geberelement zur Montage an gegenüberliegenden Bauteilen des Rahmens und des Flügels vorgesehen sind und dass die Auswerteeinheit zum Vergleich der Signale der beiden Sensoren ausgebildet ist.

Durch diese Gestaltung führt eine mögliche Manipulation des durch das Geberelement erzeugten Magnetfeldes zu einer Veränderung zumindest eines der Signale der Sensoren. Wenn beispielsweise das Geberelement ein Magnet ist, führt ein Hantieren mit einem Manipulationsmagnet zu unterschiedlichen Signalen der Sensoren. Da die Signale der beiden Sensoren miteinander verglichen werden, lässt sich die Manipulation durch eine Plausibilitätsprüfung einfach feststellen. Weiterhin können die beiden Sensoren für eine Redundanz genutzt werden, so dass bei dem Ausfall eines der Sensoren im Notbetrieb der Überwachungseinrichtung die Signale des anderen Sensors für die Überwachung der Position des Gebäudeelementes herangezogen werden. Dies ermöglicht eine besonders zuverlässige Erfassung des Gebäudeelementes. Eine getrennte Erfassung beider Sensorsignale durch die Auswerteeinheit ermöglicht auch statistische Beobachtungen zur Erkennung von Langzeitveränderungen wie zum Beispiel einem Absenken eines Türblatts oder Fensterflügels.

Die Sensoren könnten beispielsweise als optische Sensoren ausgebildet sein und bei einem ungleichmäßigen und damit unberechtigten Öffnen des Flügels unterschiedliche Signale erzeugen. Die Sensoren lassen sich jedoch gemäß einer anderen vorteilhaften Weiterbildung der Erfindung besonders vielseitig einsetzen, wenn die Sensoren zur Messung eines Magnetfeldes oder einer magnetischen Flussdichte ausgebildet sind.

Die Überwachungseinrichtung gestaltet sich gemäß einer anderen vorteilhaften Weiterbildung der Erfindung konstruktiv besonders einfach, wenn die Sensoren zur Messung des magnetischen Tunnelwiderstandes oder des Riesenmagnetowiderstandes ausgebildet sind. Solche Sensoren sind auch unter ihrer englischsprachigen Bezeichnung "Tunnel Magnetoresistance" (TMR) und "Giant Magnetoresistance" (GMR) bekannt. Diese Sensoren ändern ihren elektrischen Widerstandswert abhängig von dem vorherrschenden Magnetfeld. Die Auswerteeinheit vermag eine Differenz des elektrischen Widerstandes zwischen den beiden Sensoren erfassen. Vorzugsweise sind die beiden Sensoren gegensinnig orientiert, um so der jeweiligen Magnetfeldorientierungen auf beiden Seiten zu entsprechen.

Die Erfassung einer Manipulation am Gebäudeelement gestaltet sich gemäß einer anderen vorteilhaften Weiterbildung der Erfindung besonders einfach, wenn die Sensoren voneinander beabstandet sind. Durch diese Gestaltung wird beispielsweise erfasst, wenn versucht wird, einen magnetischen Hauptgeber durch einen zusätzlichen Magneten zu ersetzten. Dies führt jedoch zu einem weiteren Magnetfeld, welches den Vergleich der Signale der Sensoren verändert. Zumindest ist die Erzeugung eines plausiblen Signalverlaufs wegen der Beabstandung der Sensoren deutlich erschwert. In Falle einer unplausiblen Differenz der Signale der Sensoren wird die Auswerteeinheit bereits vor der Manipulation am Gebäudeelement eine Veränderung der Signale der beiden Sensoren und damit einen Manipulationsversuch erfassen. Als Geberelement eignet sich insbesondere ein Permanentmagnet.

Störungen der Sensorsignale lassen sich gemäß einer anderen vorteilhaften Weiterbildung der Erfindung weitgehend vermeiden, wenn die Sensoren in der räumlichen Orientierung außerhalb des Geberelementes abgeschirmt sind. Durch diese Gestaltung werden nur Signale des Geberelementes erfasst. Bei magnetischen Sensoren besteht eine Abschirmung vorzugsweise aus sogenanntem µ-Metall.

Zur weiteren Vereinfachung der Erfassung eines Manipulationsversuchs am Gebäudeelement trägt es gemäß einer anderen vorteilhaften Weiterbildung der Erfindung bei, wenn die Sensoren zur Anordnung an unterschiedlichen räumlichen Seiten des Gebäudeelementes vorgesehen sind.

Der Vergleich der Signale der beiden Sensoren gestaltet sich gemäß einer anderen vorteilhaften Weiterbildung der Erfindung besonders einfach, wenn die Auswerteeinheit eine Wheatstonesche Brückenschaltung hat und die Sensoren Elemente der Brückenschaltung sind.

Die Wheatstonesche Brückenschaltung gestaltet sich gemäß einer anderen vorteilhaften Weiterbildung der Erfindung konstruktiv besonders einfach, wenn die Wheatstonesche Brückenschaltung zwei magnetisch abgeschirmte Hilfssensoren als weitere Elemente hat. Vorzugsweise sind die beiden Hilfssensoren baugleich zu den Sensoren. Hierdurch lässt sich ein Temperaturdrift kompensieren. Auswirkungen durch unterschiedliche Temperaturen auf verschiedenen Seiten der Brückenschaltung werden hierdurch kompensiert.

Ein Nullabgleich der Wheatstoneschen Brückenschaltung gestaltet sich gemäß einer anderen vorteilhaften Weiterbildung der Erfindung besonders einfach, wenn ein Element der Wheatstoneschen Brückenschaltung mit mindestens einem variablen Widerstand verbunden ist. Der einstellbare Widerstand, vorzugsweise ein digitales Potentiometer, kann parallel oder seriell zu dem Element geschaltet werden.

Das Differenzsignal der beiden Sensoren lässt sich gemäß einer anderen vorteilhaften Weiterbildung der Erfindung einfach verstärken, wenn die Auswerteeinheit einen als Differenzverstärker beschalteten Operationsverstärker hat.

Die Überwachungseinrichtung lässt sich gemäß einer anderen vorteilhaften Weiterbildung der Erfindung besonders einfach montieren, wenn die Sensoren, die Auswerteeinheit und zumindest ein Teilbereich des Gebäudeelementes als vormontierbare bauliche Einheit gestaltet sind. Durch diese Gestaltung können die Sensoren und die Auswerteeinheit eine bauliche Einheit mit einem Teilbereich eines Flügels und eines Rahmens eines Fensters oder einer Tür bilden und die Position des Flügels als Gebäudeelement überwachen.

Die Montage der Überwachungseinrichtung zur Überwachung des Gebäudeelementes gestaltet sich gemäß einer anderen vorteilhaften Weiterbildung der Erfindung besonders einfach, wenn die Sensoren bei der Bildung einer baulichen Einheit mit einem zur Verriegelung des Flügels in dem Rahmen vorgesehenen Schlosskasten oder einem Schließzylinder auf unterschiedlichen Seiten des Schlosskastens oder des Schließzylinders anordenbar sind. Durch diese Gestaltung entfällt der Montageaufwand für die Sensoren an dem Gebäudeelement. Vorzugsweise ist die Auswerteeinheit ebenfalls in dem Schlosskasten oder dem Schließzylinder angeordnet.

Das zweitgenannte Problem, nämlich die Schaffung eines besonders zuverlässigen und manipulationssicheren Verfahrens zur Überwachung der Position des Gebäudeelementes wird erfindungsgemäß dadurch gelöst, dass
die Signale der beiden Sensoren auf dem gleichen Funktionsprinzip beruhen und miteinander verglichen werden und dass in Abhängigkeit von dem Vergleich auf die Position des Gebäudeelementes geschlossen wird.

Durch diese Gestaltung erfolgt die Überwachung der Position des Gebäudeelementes aus dem Vergleich der Signale zweier gleicher Sensoren. Da sich die Signale der Sensoren in Abhängigkeit von ihrer Position und der Bewegung des Gebäudeelementes um vorhersehbare Werte verändern, führt eine Manipulation zu unvorhergesehenen Änderungen der Werte der Sensoren und lässt sich einfach feststellen. Weiterhin ermöglichen die beiden Sensoren eine hohe Redundanz und damit eine Ausfallsicherheit des Verfahrens.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in
- Fig.1: eine an einer Tür angeordnete Überwachungseinrichtung zur Erfassung der Position eines Gebäudeelementes,
- Fig.2: vergrößert einen Teilbereich der Tür mit der Überwachungseinrichtung aus Figur 1 in einer Draufsicht,
- Fig.3: einen Schaltplan einer Auswerteeinheit der Überwachungseinrichtung,
- Fig.4: eine weitere Ausführungsform der Überwachungseinrichtung,
- Fig.5: schematisch einen Flussplan eines Verfahrens zur Erfassung der Position eines Gebäudeelementes.

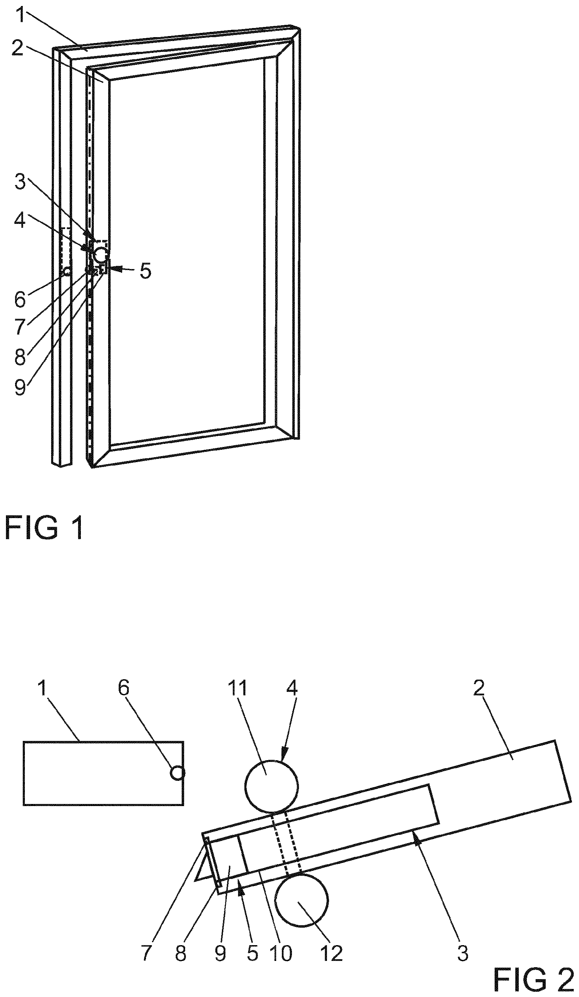

Figur 1 zeigt eine Tür eines Gebäudes mit einem gegen einen Rahmen 1 schwenkbaren, als Gebäudeelement ausgebildeten Flügel 2. In dem Flügel 2 ist ein Schloss 3 zur Verriegelung des Flügels 2 in dem Rahmen 1 angeordnet. Das Schloss 3 hat einen Knaufzylinder 4, mit dem es von einer verriegelnden Stellung in eine entriegelnde Stellung bewegt wird. Die Position des Flügels 2 wird von einer Überwachungseinrichtung 5 erfasst. Die Überwachungseinrichtung 5 hat ein am Rahmen angeordnetes Geberelement 6 und zwei am Flügel 2 angeordnete gleichartige Sensoren 7, 8, welche dasselbe physikalische Funktionsprinzip aufweisen. Eine am Flügel 2 angeordnete Auswerteeinheit 9 vergleicht die Signale der beiden Sensoren 7, 8 und erfasst daraus die Position des Flügels 2. Die Auswerteeinheit 9 kann mit einer nicht dargestellten elektronischen Schließeinrichtung der Tür oder mit einer ebenfalls nicht dargestellten Alarmanlage verbunden sein.

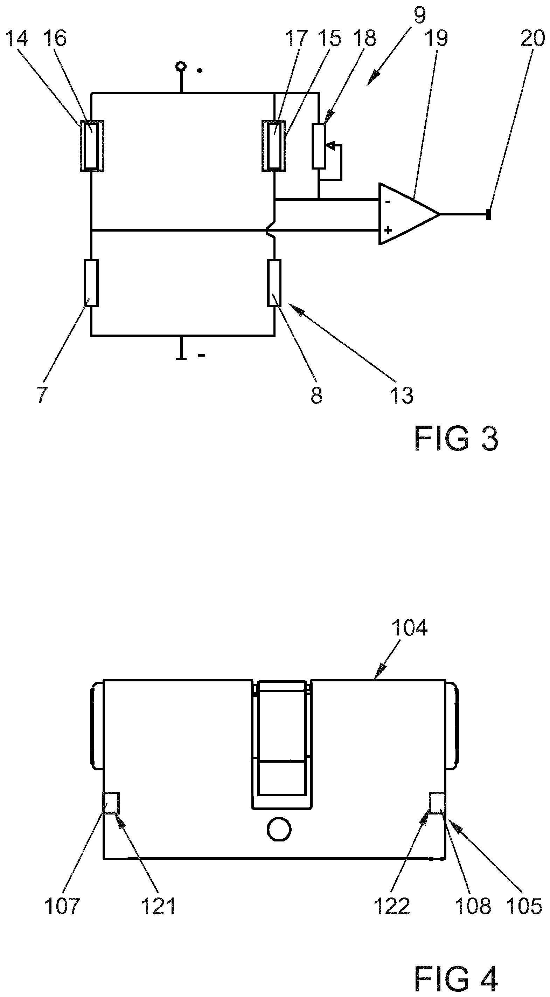

Figur 2 zeigt vergrößert die Überwachungseinrichtung 5 aus Figur 1 mit angrenzenden Bereichen des Flügels 2 und des Rahmens 1 schematisch in einer Draufsicht. Hierbei ist zu erkennen, dass die Sensoren 7, 8 an Außenseiten eines Schlosskastens 10 des Schlosses 3 angeordnet sind. Hierdurch sind die Sensoren 7, 8 voneinander beabstandet. In einer weiteren, nicht dargestellten Ausführungsform können die Sensoren 7, 8 in Knäufen 11, 12 des Knaufzylinders 4 angeordnet sein. Die Auswerteeinheit 9 ist ebenfalls in dem Schlosskasten 10 integriert und ist anhand ihres Schaltplans in Figur 3 näher erläutert. Die Sensoren 7, 8 und die Auswerteeinheit 9 sind mit dem Schlosskasten 10 als vormontierbare bauliche Einheit ausgebildet und werden mit diesem gemeinsam an dem Flügel montiert. In dem dargestellten Ausführungsbeispiel ist das Geberelement 6 als Permanentmagnet ausgebildet. Die Sensoren 7, 8 sind identisch und erfassen das Magnetfeld oder die magnetische Flussdichte des Geberelementes 6.

Figur 3 zeigt einen Schaltplan der Auswerteeinheit 9 aus Figur 2. Die Auswerteeinheit 9 hat eine Wheatstonesche Brückenschaltung 13. Die beiden Sensoren 7, 8 sind jeweils Elemente der Brückenschaltung 13 und können gegenüber störenden, von außerhalb des Geberelementes erzeugten Magnetfeldern abgeschirmt sein. Zwei weitere mittels magnetischer Abschirmungen 14, 15 abgedeckte Hilfssensoren 16, 17 sind weitere Elemente der Brückenschaltung 13. Die Hilfssensoren 16, 17 sind gleichartig zu den Sensoren 7, 8 und reagieren aufgrund ihrer Abschirmungen 14, 15 nicht auf äußere Magnetfelder oder auf das Magnetfeld des Geberelementes 6. Einer der Hilfssensoren 17 ist mit einem variablen Widerstand 18 verbunden. Die Auswerteeinheit 9 hat zudem einen Operationsverstärker 19 mit einer Schnittstelle 20 zur Ausgabe der Signale der Überwachungseinrichtung 5 beispielsweise zu einer nicht dargestellten Alarmanlage oder elektrischen Schließeinrichtung.

Figur 4 zeigt einen Schließzylinder 104 für ein Schloss mit einem Teilbereich einer weiteren Ausführungsform der Überwachungseinrichtung 105. Der Schließzylinder 104 hat an seinen Enden jeweils einen Sensor 107, 108 der Überwachungseinrichtung 105. Die Sensoren 107, 108 sind in Ausnehmungen 121, 122 des Schließzylinders 104 befestigt. Damit bilden der Schließzylinder 104 und die beiden Sensoren 107, 108 eine vormontierbare bauliche Einheit, welche in vorhandenen Schlosskästen einfach nachgerüstet werden kann.

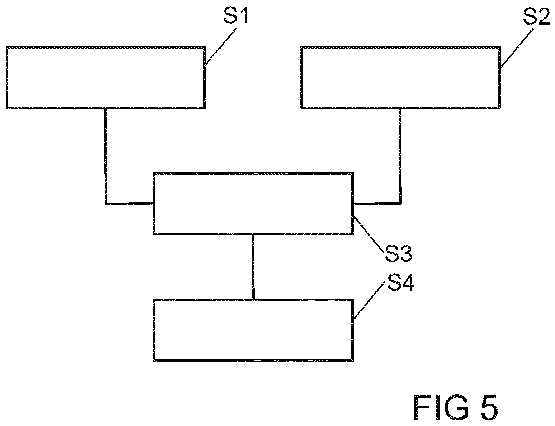

Figur 5 zeigt einen Flussplan eines Verfahrens zur Erfassung der Position des in Figur 1 als Flügel 2 ausgebildeten Gebäudeelementes. In einem ersten Schritt S1 werden die Signale eines ersten Sensors 7 erfasst. In einem zweiten Schritt S2 werden die Signale eines zweiten Sensors 8 erfasst. Die beiden Schritte S1, S2 können selbstverständlich parallel ablaufen. Die Signale werden im Schritt S3 miteinander verglichen und der Vergleich im Schritt S4 verstärkt und zu der in Figur 3 beschriebenen Schnittstelle 20 weitergeleitet.

## Patentansprüche

1. Die Position eines gegen einen Rahmen (1) schwenkbaren Flügels (2), einer Klappe oder dergleichen überwachende Überwachungseinrichtung (5, 105) mit einem ersten Sensor (7, 107) und mit einem zweiten Sensor (8, 108), und mit einer Auswerteeinheit (9) zur Auswertung der Signale, wobei die beiden Sensoren (7, 8, 107, 108) dasselbe physikalische Funktionsprinzip aufweisen, wobei die Sensoren (7, 8, 107, 108) und ein die Sensoren (7, 8, 107, 108) ansteuerndes Geberelement (6) zur Montage an gegenüberliegenden Bauteilen des Rahmens (1) und des Flügels (2), der Klappe oder dergleichen vorgesehen sind und dass die Auswerteeinheit (9) zum Vergleich der Signale der beiden Sensoren (7, 8, 107, 108) ausgebildet ist, wobei der Flügel (2), die Klappe oder dergleichen ein Gebäudeelement ist.

2. Überwachungseinrichtung nach Anspruch 1, **dadurch gekennzeichnet, dass** die Sensoren (7, 8, 107, 108) zur Messung eines Magnetfeldes oder einer magnetischen Flussdichte ausgebildet sind.

3. Überwachungseinrichtung nach Anspruch 1 oder 2, **dadurch gekennzeichnet, dass** die Sensoren (7, 8, 107, 108) zur Messung des magnetischen Tunnelwiderstandes oder des Riesenmagnetowiderstandes ausgebildet sind.

4. Überwachungseinrichtung nach zumindest einem der vorhergehenden Ansprüche, **dadurch gekennzeichnet, dass** die Sensoren (7, 8, 107, 108) voneinander beabstandet sind.

5. Überwachungseinrichtung nach zumindest einem der vorhergehenden Ansprüche, **dadurch gekennzeichnet, dass** die Sensoren (7, 8, 107, 108) in der räumlichen Orientierung außerhalb des Geberelementes (6) abgeschirmt sind.

6. Überwachungseinrichtung nach zumindest einem der vorhergehenden Ansprüche, **dadurch gekennzeichnet, dass** die Sensoren (7, 8, 107, 108) zur Anordnung an unterschiedlichen räumlichen Seiten des Gebäudeelementes vorgesehen sind.

7. Überwachungseinrichtung nach zumindest einem der vorhergehenden Ansprüche, **dadurch gekennzeichnet, dass** die Auswerteeinheit (9) eine Wheatstonesche Brückenschaltung (13) hat und die Sensoren (7, 8, 107, 108) Elemente der Brückenschaltung (3) sind.

8. Überwachungseinrichtung nach Anspruch 7, **dadurch gekennzeichnet, dass** die Wheatstonesche Brückenschaltung (13) zwei magnetisch abgeschirmte Hilfssensoren (16, 17) als weitere Elemente hat.

9. Überwachungseinrichtung nach Anspruch 7 oder 8, **dadurch gekennzeichnet, dass** ein Element der Wheatstoneschen Brückenschaltung (13) mit mindestens einem variablen Widerstand (18) verbunden ist.

10. Überwachungseinrichtung nach zumindest einem der vorhergehenden Ansprüche, **dadurch gekennzeichnet, dass** die Auswerteeinheit (9) einen als Differenzverstärker beschalteten Operationsverstärker (19) hat.

11. Überwachungseinrichtung nach zumindest einem der vorhergehenden Ansprüche, **dadurch gekennzeichnet, dass** die Sensoren (7, 8, 107, 108), die Auswerteeinheit (9) und zumindest ein Teilbereich des Gebäudeelementes als vormontierbare bauliche Einheit gestaltet sind.

12. Überwachungseinrichtung nach zumindest einem der vorhergehenden Ansprüche, **dadurch gekennzeichnet, dass** die Sensoren (7, 8, 107, 108) bei der Bildung einer baulichen Einheit mit einem zur Verriegelung des Flügels (2) in dem Rahmen (1) vorgesehenen Schlosskasten (10) oder einem Schließzylinder (104) auf unterschiedlichen Seiten des Schlosskastens (10) oder des Schließzylinders (104) anordenbar sind.

13. Überwachungsverfahren zur Überwachung der Position eines gegen einen Rahmen (1) schwenkbaren Flügels (2), einer Klappe oder dergleichen, bei dem Signale eines ersten Sensors (7, 107) und eines zweiten Sensors (8, 108) erfasst werden, wobei der Flügel (2), die Klappe oder dergleichen ein Gebäudeelement ist, wobei die Sensoren (7, 8, 107, 108) und ein die Sensoren (7, 8, 107, 108) ansteuerndes Geberelement (6) zur Montage an gegenüberliegenden Bauteilen des Rahmens (1) und des Flügels (2), der Klappe oder dergleichen angebracht sind und wobei die Signale der beiden Sensoren (7, 8, 107, 108) auf dem gleichen Funktionsprinzip beruhen und miteinander verglichen werden und wobei in Abhängigkeit von dem Vergleich auf die Position des Gebäudeelementes geschlossen wird.

## Claims

1. Monitoring device (5, 105) which monitors the position of a leaf (2), flap or the like which can be pivoted against a frame (1), the device comprising a first sensor (7, 107) and a second sensor (8, 108), and comprising an evaluation unit (9) for evaluating the signals, wherein the two sensors (7, 8, 107, 108) have the same physical operating principle, wherein the sensors (7, 8, 107, 108) and a transmitter element (6) which controls the sensors (7, 8, 107, 108) are intended to be mounted on opposite components of the frame (1) and the leaf (2), flap or the like, and the evaluation unit (9) is designed to compare the signals of the two sensors (7, 8, 107, 108), wherein the leaf (2), flap or the like is a building element.

2. Monitoring device according to claim 1, **characterized in that** the sensors (7, 8, 107, 108) are designed to measure a magnetic field or magnetic flux density.

3. Monitoring device according to claim 1 or claim 2, **characterized in that** the sensors (7, 8, 107, 108) are designed to measure the magnetic tunnel resistance or the giant magnetoresistance.

4. Monitoring device according to at least one of the preceding claims, **characterized in that** the sensors (7, 8, 107, 108) are spaced apart from one another.

5. Monitoring device according to at least one of the preceding claims, **characterized in that** the sensors (7, 8, 107, 108) are shielded in spatial orientation outside the transmitter element (6).

6. Monitoring device according to at least one of the preceding claims, **characterized in that** the sensors (7, 8, 107, 108) are intended to be arranged on different spatial sides of the building element.

7. Monitoring device according to at least one of the preceding claims, **characterized in that** the evaluation unit (9) has a Wheatstone bridge circuit (13) and the sensors (7, 8, 107, 108) are elements of the bridge circuit (3).

8. Monitoring device according to claim 7, **characterized in that** the Wheatstone bridge circuit (13) has two magnetically shielded auxiliary sensors (16, 17) as further elements.

9. Monitoring device according to claim 7 or claim 8, **characterized in that** an element of the Wheatstone bridge circuit (13) is connected to at least one variable resistor (18).

10. Monitoring device according to at least one of the preceding claims, **characterized in that** the evaluation unit (9) has an operational amplifier (19) configured as a differential amplifier.

11. Monitoring device according to at least one of the preceding claims, **characterized in that** the sensors (7, 8, 107, 108), the evaluation unit (9) and at least a portion of the building element are designed as a pre-assembled structural unit.

12. Monitoring device according to at least one of the preceding claims, **characterized in that,** when a structural unit is formed with a lock case (10) or a lock cylinder (104) provided for locking the leaf (2) in the frame (1), the sensors (7, 8, 107, 108) can be arranged on different sides of the lock case (10) or the lock cylinder (104).

13. Monitoring method for monitoring the position of a leaf (2), flap or the like which can be pivoted against a frame (1), in which method signals from a first sensor (7, 107) and a second sensor (8, 108) are detected, wherein the leaf (2), flap or the like is a building element, wherein the sensors (7, 8, 107, 108) and a transmitter element (6) which controls the sensors (7, 8, 107, 108) are mounted on opposite components of the frame (1) and the leaf (2), flap or the like, and wherein the signals of the two sensors (7, 8, 107, 108) are based on the same operating principle and are compared with one another, and wherein the position of the building element is determined on the basis of the comparison.

## Revendications

1. Dispositif de surveillance (5, 105) surveillant la position d'un battant (2), d'un volet ou similaire pouvant pivoter contre un cadre (1), comportant un premier capteur (7, 107) et comportant un second capteur (8, 108), et comportant une unité d'évaluation (9) pour évaluer les signaux, dans lequel les deux capteurs (7, 8, 107, 108) présentent le même principe de fonctionnement physique, dans lequel les capteurs (7, 8, 107, 108) et un élément émetteur (6) commandant les capteurs (7, 8, 107, 108) sont prévus pour être montés sur des composants opposés du cadre (1) et du battant (2), du volet ou similaire, et en ce que l'unité d'évaluation (9) est conçue pour comparer les signaux des deux capteurs (7, 8, 107, 108), dans lequel le battant (2), le volet ou similaire est un élément de bâtiment.

2. Dispositif de surveillance selon la revendication 1, **caractérisé en ce que** les capteurs (7, 8, 107, 108) sont conçus pour mesurer un champ magnétique ou une densité de flux magnétique.

3. Dispositif de surveillance selon la revendication 1 ou 2,
**caractérisé en ce que** les capteurs (7, 8, 107, 108) sont conçus pour mesurer la magnétorésistance tunnel ou la magnétorésistance géante.

4. Dispositif de surveillance selon au moins l'une des revendications précédentes, **caractérisé en ce que** les capteurs (7, 8, 107, 108) sont espacés l'un de l'autre.

5. Dispositif de surveillance selon au moins l'une des revendications précédentes, **caractérisé en ce que** les capteurs (7, 8, 107, 108) sont blindés dans l'orientation spatiale à l'extérieur de l'élément émetteur (6).

6. Dispositif de surveillance selon au moins l'une des revendications précédentes, **caractérisé en ce que** les capteurs (7, 8, 107, 108) sont prévus pour être agencés sur différents côtés spatiaux de l'élément de bâtiment.

7. Dispositif de surveillance selon au moins l'une des revendications précédentes, **caractérisé en ce que** l'unité d'évaluation (9) a un circuit en pont de Wheatstone (13) et les capteurs (7, 8, 107, 108) sont des éléments du circuit en pont (3).

8. Dispositif de surveillance selon la revendication 7, **caractérisé en ce que** le circuit en pont de Wheatstone (13) a deux capteurs auxiliaires à blindage magnétique (16, 17) comme autres éléments.

9. Dispositif de surveillance selon la revendication 7 ou 8, **caractérisé en ce qu'**un élément du circuit en pont de Wheatstone (13) est relié à au moins une résistance variable (18).

10. Dispositif de surveillance selon au moins l'une des revendications précédentes, **caractérisé en ce que** l'unité d'évaluation (9) a un amplificateur opérationnel (19) branché en tant qu'amplificateur différentiel.

11. Dispositif de surveillance selon au moins l'une des revendications précédentes, **caractérisé en ce que** les capteurs (7, 8, 107, 108), l'unité d'évaluation (9) et au moins une zone partielle de l'élément de bâtiment sont conçus comme une unité de construction pouvant être prémontée.

12. Dispositif de surveillance selon au moins l'une des revendications précédentes, **caractérisé en ce que** les capteurs (7, 8, 107, 108) peuvent être agencés sur différents côtés d'un boîtier de serrure (10) ou d'un cylindre de serrure (104) lors de la formation d'une unité de construction comportant le boîtier de serrure (10) ou le cylindre de serrure (104) prévu pour le verrouillage du battant (2) dans le cadre (1).

13. Procédé de surveillance pour surveiller la position d'un battant (2), d'un volet ou similaire pouvant pivoter contre un cadre (1), dans lequel des signaux d'un premier capteur (7, 107) et d'un second capteur (8, 108) sont détectés, dans lequel le battant (2), le volet ou similaire est un élément de bâtiment, dans lequel les capteurs (7, 8, 107, 108) et un élément émetteur (6) commandant les capteurs (7, 8, 107, 108) sont placés pour un montage sur des composants opposés du cadre (1) et du battant (2), du volet ou similaire, et dans lequel les signaux des deux capteurs (7, 8, 107, 108) reposent sur le même principe de fonctionnement et sont comparés entre eux, et dans lequel la position de l'élément de bâtiment est déduite en fonction de la comparaison.
